# EUROPÄISCHE PATENTSCHRIFT

(11) **EP 3 491 180 B1**
(45) Veröffentlichungstag und Bekanntmachung des Hinweises auf die Patenterteilung: **10.03.2021**
(21) Anmeldenummer: 17749109.9
(22) Anmeldetag: 27.07.2017
(51) Int. Cl.: D04B 1/14, D03D 15/00

(54) **TEXTILES ERZEUGNIS ZUR HERSTELLUNG VON BEKLEIDUNG, INSBESONDERE SPORTBEKLEIDUNG, ODER DGL. UND BEKLEIDUNG AUS EINEM DERARTIGEN TEXTILEN ERZEUGNIS**
TEXTILE PRODUCT FOR PRODUCING CLOTHING, IN PARTICULAR SPORTS CLOTHING, OR SIMILAR, AND CLOTHING MADE OF A TEXTILE PRODUCT OF THIS TYPE
PRODUIT TEXTILE POUR LA FABRICATION DE VÊTEMENTS, EN PARTICULIER DE VÊTEMENTS DE SPORT OU ANALOGUE ET VÊTEMENTS EN UN TEL PRODUIT TEXTILE

(30) Priorität: 28.07.2016 AT 506852016
(43) Veröffentlichungstag der Anmeldung: 05.06.2019
(73) Patentinhaber: Beck, Gerald, 5310 Mondsee (AT); Falke, Annegret, 57392 Schmallenberg (DE)
(72) Erfinder: BECK, Gerald, 5310 Mondsee (AT)
(74) Vertreter: Sonn & Partner Patentanwälte
(86) Internationale Anmeldenummer: PCT/AT2017/060190
(87) Internationale Veröffentlichungsnummer: WO 2018/018059

(56) Entgegenhaltungen:
- WO-A1-2013/144490
- DE-T2- 69 024 466
- JP-A- 2004 036 012
- JP-A- 2009 174 081
- US-A1- 2007 093 162

## Beschreibung

Die Erfindung betrifft ein textiles Erzeugnis zur Herstellung von Bekleidung, insbesondere Sportbekleidung, oder dgl., aus einem textilen Flächengebilde aus zumindest einem ersten Garn und zumindest einem zweiten Garn, welche Garne aus unterschiedlichen, ausschließlich natürlichen Materialien bestehen, wobei das textile Flächengebilde an einer Seite, die vorgesehen ist, einem Träger zugewandt zu werden, hauptsächlich aus dem ersten Garn besteht und das textile Flächengebilde an einer Seite, die vorgesehen ist, vom Träger abgewandt zu werden, hauptsächlich aus dem zweiten Garn besteht.

Weiters betrifft die Erfindung auch eine Bekleidung, insbesondere Sportbekleidung, aus einem oben genannten textilen Erzeugnis.

Textile Erzeugnisse zur Herstellung von Sportbekleidung, sogenannte Funktionsbekleidung, besteht vornehmlich aus Polyamid und Polyester, was mit Ausnahme einer schnelleren Trocknung für den Träger bzw. Sportler kaum Vorteile bewirkt und auch eine enorme Belastung für die Umwelt darstellt. Für die Entsorgung von Kleidung aus Kunststoff gibt es weltweit kein Konzept, weshalb wir hier in Zukunft mit großen Problemen konfrontiert sein werden.

Manche Naturfasern stellen hier keine Alternative dar, da sie eine zu hohe Wasseraufnahmefähigkeit aufweisen und deshalb zu langsam abtrocknen.

Zum Stoppen der Vermehrung von Schweißbakterien und Verhinderung der damit einhergehenden Geruchsentwicklung wird Funktionsbekleidung mit hochgiftigem Silber oder Zinkionen ausgerüstet. Diese Ionen waschen sich jedoch nach üblicherweise mehreren Waschgängen aus und bieten danach keinen Schutz mehr vor der Vermehrung der Schweißbakterien. Darüber hinaus wird der Abrieb beim Waschen in der Waschmaschine in Form von Polyamid oder Polyesterpartikeln über das Abwasser abgegeben, was mittlerweile in Gewässern nachweisbar ist. Über die Aufnahme durch Fische gelangen die Plastikmoleküle wiederum in die Nahrung und schließlich in den menschlichen Körper.

Ein textiles Erzeugnis der gegenständlichen Art wird beispielsweise in der WO 2007/091023 A1 beschrieben, wobei durch die Kombination verschiedener Materialien und die spezielle geometrische Anordnung der textilen Flächengebilde eine verbesserte Feuchtigkeitsabgabe zugelassen werden soll und die Körpertemperatur nicht wesentlich erhöht werden soll. Dabei werden bevorzugt Garne aus natürlichen Materialien, beispielsweise Hanf oder Baumwolle, aber auch Kombinationen mit Polyester besonders vorteilhaft beschrieben. Neben dem höheren Herstellungsaufwand durch die besondere geometrische Gestaltung des textilen Erzeugnisses ist auch die Unterstützung der Feuchtigkeitsabgabe bei der Verwendung als Sportbekleidung nicht als optimal anzusehen.

Ein Feuchtigkeit aufnehmendes Gewebe ist auch aus der EP 1 968 785 B1 bekanntgeworden, wobei das textile Flächengebilde, beispielsweise das Gewebe oder Gestricke, aus einem Gemisch von hydrophoben und hydrophilen Fasern besteht. Auch bei diesem textilen Erzeugnis werden Kombinationen der Naturfasern mit Kunststofffasern vorgeschlagen.

Die DE 195 47 704 A1 beschreibt ein Verbundtextilgewebe mit feuchtigkeitsleitenden Eigenschaften, wobei zwei Gewebelagen vorgesehen sind. Die der Haut des Trägers zugewandte Gewebelage weist eine höhere Denierzahl als die der Haut des Trägers abgewandte Gewebelage auf, wodurch über die äußere Gewebelage mehr Feuchtigkeit von der darunter liegenden Gewebelage aufgenommen werden können soll.

Die US 2007/0093162 A1 betrifft ein textiles Erzeugnis mit einer Innenseite, die vollständig aus zumindest einem hydrophoben Garn gebildet ist, und einer Außenseite, die zumindest teilweise aus zumindest einem hydrophilen Garn gebildet ist. Sowohl das hydrophobe als auch das hydrophile Garn können Naturfasern enthalten. Ungünstiger Weise wird für die Ableitung von Feuchtigkeit vom Träger des textilen Erzeugnisses an die Umgebung das Garn für die Innenseite entsprechend vorbehandelt, um diesem eine hydrophobe Eigenschaft zu verleihen. Die Vorbehandlung umfasst ein Eintauchen oder Besprühen des Garns, bspw. mit Silikon, Chemikalien, Öl, Latex oder Kohlenwasserstoff, gegebenenfalls unter Hinzufügen eines Elektrolyts und/oder eines Vernetzungsmittels. Das hydrophobe Garn und das hydrophile Garn bestehen nicht aus unterschiedlichen, ausschließlich natürlichen Materialien.

Die WO 2013/144490 A1 betrifft ein elastisches Textil, das eine zwischen einer inneren und einer äußeren Schicht angeordnete Mittelschicht aufweist, wobei die innere Schicht, mit hydrophoben Garnen, ein geringeres Absorptionsvermögen von Flüssigkeiten, insbesondere Wasser, als die äußere Schicht, mit mehr hydrophilen Garnen, aufweist. Als beispielhafte Materialien für hydrophile Garne sind Baumwolle, Viskose oder synthetische Materialien genannt. Als Materialien für die hydrophoben Garne sind ebenfalls synthetische Materialien, Baumwolle oder Wolle erwähnt. Die Innen- und Außenschichten sind mit Multifilamentgarnen vorzugsweise aus dem gleichen Material versehen. Die Multifilamentgarne der Innenschicht haben eine geringere Anzahl von Filamenten pro Garn als die Multifilamentgarne der Außenschicht.

Die JP2009174081 A betrifft die Fertigung eines gestrickten oder gewebten Textils aus Cellulose mit einer Feuchtigkeitsaufnahme von unter 8%. Mehrlagige Textilschichten unterschiedlicher Hydrophobizität werden nicht beschrieben.

Die Aufgabe der vorliegenden Erfindung besteht in der Schaffung eines oben genannten textilen Erzeugnisses, welches sich insbesondere für die Herstellung von Bekleidung, insbesondere Sportbekleidung, eignet, sowie eine Bekleidung, insbesondere Sportbekleidung, die die Körpertemperatur des Trägers möglichst wenig erhöht und die Feuchtigkeitsabgabe unterstützen soll. Nachteile bekannter vergleichbarer textiler Erzeugnisse sollen vermieden oder zumindest reduziert werden.

Gelöst wird die erfindungsgemäße Aufgabe dadurch, dass das erste Garn aus einem Material mit geringer Wasseraufnahme von 5% bis 30% und das zweite Garn aus einem Material mit hoher Wasseraufnahme von 50% bis 80% besteht. Durch die Verwendung der zumindest zwei Garne aus ausschließlich natürlichen Materialien können keine Kunststoffpartikel in die Umwelt gelangen und es wird die Umwelt nicht so stark belastet. Darüber hinaus wird die Körpertemperatur des Trägers einer derartig hergestellten Bekleidung wesentlich weniger erhöht als bei vergleichbarer Bekleidung aus Kunststoffgarnen. Durch die Verwendung eines Garns mit geringer Wasseraufnahme an der dem Träger zugewandten Seite kann der Schweiß aufgenommen werden und dann über das außenliegende zweite Garn mit der höheren Wasseraufnahme optimal und rasch abgegeben und verdunstet werden. Dadurch resultiert ein textiles Erzeugnis, welches den Schweiß vom Körper über das erste Garn an das zweite Garn abgibt und somit dem Träger ein angenehmes, nicht nasses Tragegefühl vermittelt und gleichzeitig dadurch auch leistungssteigernd wirkt. Die Verwendung von natürlichen Materialien garantiert auch, dass sich die Schweißbakterien auswaschen lassen und es dadurch zu keiner lästigen Geruchsentwicklung des Stoffes kommt. Die angegebenen Werte stellen optimale Bereiche für die geringe Wasseraufnahme für das erste Garn an der Innenseite und die höhere Wasseraufnahmefähigkeit des Garns an der Außenseite dar.

Vorzugsweise besteht das erste Garn aus Hanf. Hanf ist ein Stoff mit bekanntlich geringer Wasseraufnahmefähigkeit, weshalb es bereits in frühen Jahren für die Herstellung von Seilen für Bergsteiger oder die Herstellung von Segeln verwendet wurde. Darüber hinaus wächst Hanf ohne Bewässerung und ohne Einsatz von Herbiziden und Pestiziden und kann somit relativ kostengünstig zu Garnen verarbeitet werden. Holzzellstoff wiederum zeichnet sich durch eine hohe Wasseraufnahmefähigkeit aus und ist ebenfalls in ausreichender Menge verfügbar und relativ kostengünstig herstellbar. Darüber hinaus sei auch darauf hingewiesen, dass Hanf eine natürliche fungizide Wirkung hat, wodurch sich keine Hautpilze bilden können. Auch ist durch die Verwendung von Hanf als erstes Garn auf der der Körperoberfläche des Trägers zugewandten Seite gewährleistet, dass Menschen mit Allergien diese Kleidung bevorzugt verwenden können, da es bis heute keine bekannten Allergien gegen Hanf gibt.

Das zweite Garn besteht vorzugsweise aus Zellstoff, beispielsweise Holzzellstoff. Materialkombinationen, wie Hanf und Holzzellstoff, sind in ihrer gesamten Produktionskette sauerstoffpositiv, was bedeutet, dass Produkte mit dieser Materialkombination Sauerstoff für den Planeten erzeugen und nicht Stickstoff.

Bevorzugt ist ein textiles Flächengebilde, welches aus 20 bis 60 Gew.-% des ersten Garns und 30 bis 80 Gew.-% des zweiten Garns besteht. Je nach Anwendung werden die Anteile des ersten und zweiten Garns entsprechend angepasst.

Besonders bevorzugt, insbesondere für die Herstellung von Sportbekleidung, ist ein textiles Flächengebilde aus 35 Gew.-% des ersten Garns und 65 Gew.-% des zweiten Garns. Eine derartige Verteilung der Anteile des ersten Garns, beispielsweise aus Hanf, und des zweiten Garns, beispielsweise aus Holzzellstoff wie z.B. Tencel, hat sich als besonders vorteilhaft erwiesen.

Das textile Flächengebilde kann auch ein drittes Garn aufweisen, durch welches dem textilen Erzeugnis bestimmte Eigenschaften verliehen werden können. Dabei ist es vorteilhaft, insbesondere für die Umweltproblematik, wenn auch das dritte und allenfalls weitere Garn aus natürlichen Materialien hergestellt ist. Für die Verleihung bestimmter Eigenschaften, wie z.B. einer höheren Dehnbarkeit, kann es jedoch auch vorteilhaft oder notwendig sein, für das dritte Garn Kunststoff einzusetzen, wobei die Anteile gegenüber dem ersten und zweiten Garn gering gehalten werden.

Beispielsweise kann das dritte Garn aus Kunstfaser, vorzugsweise aus Elastan, beispielsweise Lycra, oder Polyamid bestehen. Dadurch kann dem textilen Erzeugnis eine entsprechende Dehnbarkeit verliehen werden, was einen höheren Tragekomfort für den Träger bedeutet.

Dabei weist das textile Flächengebilde vorzugsweise nur 5 bis 25 Gew.-% des dritten Garns aus Kunstsoff auf. Durch derartige geringe Anteile des dritten Garns, welches allenfalls aus Kunststoff bestehen kann, wird nur ein geringerer Teil umweltbelastenden Materials im textilen Erzeugnis vorgesehen.

Das erste Garn besitzt eine Feinheit von mindestens 20 Nm, vorzugsweise mindestens 38 Nm. Je nachdem für welche Zwecke das textile Erzeugnis verwendet wird, kann die Feinheit des Garns unterschiedlich sein. Für die Herstellung von Sportbekleidung beispielsweise kann auch eine Feinheit von bis zu 100 Nm vorteilhaft sein.

Auch das zweite Garn weist eine Feinheit von mindestens 20 Nm, vorzugsweise mindestens 40 Nm, auf.

Beim allfälligen dritten Garn ist die Feinheit ebenfalls mindestens 20 Nm, vorzugsweise mindestens 40 Nm.

Um dem textilen Erzeugnis eine ansprechende Erscheinung zu geben, können die Garne eingefärbt sein. Dabei werden die Garne nach herkömmlichen Methoden eingefärbt. Alternativ zu der Einfärbung der Garne vor der Herstellung des textilen Erzeugnisses kann auch eine nachträgliche Einfärbung oder Bedruckung des textilen Erzeugnisses in herkömmlicher Weise erfolgen.

Das textile Flächengebilde kann ein Gestrick sein, welches durch Stricken der Garne vorzugsweise mit Plattiertechnik hergestellt ist. Das Gestrick wird so hergestellt, dass die Maschen aus dem ersten Garn an der Innenseite des textilen Erzeugnisses, welche dem Körper des Trägers zugewandt ist, angeordnet sind, während die Maschen des anderen Garnes an der Außenseite des textilen Erzeugnisses, welche vom Träger abgewandt ist, angeordnet sind.

Auch kann das textile Flächengebilde ein Gewebe sein, welches durch Weben der Garne hergestellt ist. Dies stellt eine alternative Herstellungsmethode des textilen Flächengebildes zum Stricken dar.

Gelöst wird die erfindungsgemäße Aufgabe auch durch eine Bekleidung, insbesondere Sportbekleidung, aus einem oben erwähnten textilen Erzeugnis. Neben Bekleidung können auch andere Erzeugnisse wie z.B. Bettwäsche, Sitzbezüge oder vieles mehr aus dem genannten textilen Erzeugnis hergestellt werden.

Die Erfindung wird anhand der beigefügten Zeichnungen näher erläutert. Darin zeigen:
Fig. 1 einen Querschnitt durch ein textiles Erzeugnis gemäß der Erfindung;
Fig. 2A bis 2C verschiedene Prinzipskizzen eines textilen Erzeugnisses mit einem Gestrick als textiles Flächengebilde;
Fig. 3 einen Querschnitt durch ein textiles Erzeugnis mit einem Gewebe als textiles Flächengebilde;
Fig. 4 ein aus dem textilen Erzeugnis hergestelltes T-Shirt als Bekleidung; und
Fig. 5 einen Querschnitt durch eine alternative Ausführungsform eines textilen Erzeugnisses gemäß der vorliegenden Erfindung.

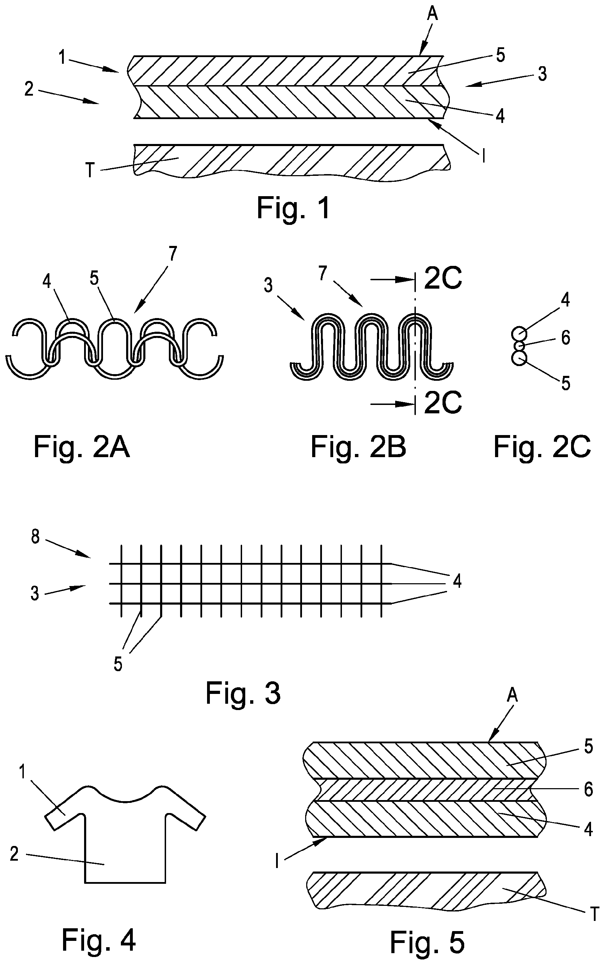

In Fig. 1 ist ein schematischer Querschnitt durch ein erfindungsgemäßes textiles Erzeugnis 1 zur Herstellung von Bekleidung 2 im Bezug auf einen Träger T der Bekleidung 2 dargestellt. Das textile Erzeugnis 1 besteht aus einem textilen Flächengebilde 3, beispielsweise einem Gestrick 7 (s. Fig. 2) oder Gewebe 8 (s. Fig. 3) aus zumindest einem ersten Garn 4 und zumindest einem zweiten Garn 5 aus unterschiedlichen Materialien. Die beiden Garne 4, 5 bestehen ausschließlich aus natürlichen Materialien, wobei das textile Flächengebilde 3 an der dem Träger T zugewandten Seite I (der Innenseite) hauptsächlich aus dem ersten Garn 4 besteht und das textile Flächengebilde 3 an der dem Träger T abgewandten Seite A (der Außenseite) hauptsächlich aus dem zweiten Garn 5 besteht. Das erste dem Träger T zugewandte Garn 4 besteht aus einem Material mit geringer Wasseraufnahme von 5% bis 30% wohingegen das zweite dem Träger T abgewandte Garn 5 aus einem Material mit hoher Wasseraufnahme von 50% bis 80% besteht. Beispielsweise wird das erste Garn 4 aus Hanf hergestellt. Das zweite Garn 5 besteht aus einem Material mit höherer Wasseraufnahme, beispielsweise Zellstoff, insbesondere Holzzellstoff, beispielsweise Tencel. Durch diese Anordnung wird gewährleistet, dass der dem Körper zugewandte Teil des textilen Erzeugnisses 1 nur so viel Feuchtigkeit bzw. Schweiß aufnimmt, wie auch sicher und rasch an die Außenseite abtransportiert und dort verdunsten kann. Es entsteht dadurch eine Art Sog, der kontinuierlich Schweiß von der Haut des Trägers T an die Außenseite A leitet. Die Haut des Trägers T an der Innenseite I bleibt dadurch praktisch trocken und die Feuchtigkeit wird über das zweite Garn 5 mit der höheren Wasseraufnahme verdunstet. Dies bewirkt, dass der Träger der aus dem textilen Erzeugnis 1 hergestellten Bekleidung leistungsfähiger bleibt und dessen Körpertemperatur nicht zu stark ansteigt.

Darüber hinaus ist durch die Verwendung von ausschließlich natürlichen Materialien für die Garne 4 und 5 die biologische Abbaubarkeit des textilen Erzeugnisses 1 gegeben und die Umweltbelastung verringert.

Fig. 2A zeigt eine Prinzipskizze eines textilen Flächengebildes 3 für ein oben genanntes textiles Erzeugnis 1 zur Herstellung von Bekleidung 2, insbesondere Sportbekleidung, in Form eines Gestricks 7 aus zwei verschiedenen Garnen 4 und 5.

Die Ausführungsvariante gemäß Fig. 2B zeigt ein Gestrick 7, welches durch Plattieren hergestellt ist, wobei neben dem ersten Garn 4 und dem zweiten Garn 5 ein weiteres drittes Garn 6 mitgestrickt wurde, welches dem textilen Erzeugnis 1 gewisse Eigenschaften verleiht. Beispielsweise kann durch die Zugabe eines dritten Garns 6 aus Kunstfaser, vorzugsweise aus Polyamid oder Elastan, wie z.B. Lycra, dem textilen Erzeugnis 1 eine höhere Dehnbarkeit verliehen werden. Allerdings wird dadurch ein gewisser Anteil an Kunststoffmaterial in Kauf genommen, wodurch die oben genannten Vorteile in Bezug auf die Umweltverträglichkeit reduziert werden. Allerdings wird der Anteil an diesem dritten Garn 6 und allenfalls vierten und fünften Garn gegenüber dem ersten Garn 4 und dem zweiten Garn 5 gering ausfallen. Um die Umweltverträglichkeit zu erhöhen, kann das dritte Garn auch ein Biopolymer sein, was dann wieder biologisch abbaubar ist.

Fig. 2C zeigt die Anordnung der Garne 4, 5 und 6 im Schnitt der Prinzipskizze gemäß Fig. 2B.

Fig. 3 zeigt einen Querschnitt durch ein textiles Flächengebilde 3 in Form eines Gewebes 8, welches durch Weben der Garne 4 und 5, allenfalls eines weiteren Garnes 6 (nicht dargestellt), hergestellt wird.

Schließlich zeigt Fig. 4 eine aus einem oben genannten textilen Erzeugnis hergestellte Bekleidung 2 in Form eines T-Shirts. Neben einem T-Shirt können natürlich auch andere Bekleidungsstücke, wie z.B. Hosen oder Jacken, aber auch andere Erzeugnisse, wie z.B. Bettwäsche oder Stoffbezüge, hergestellt werden.

Fig. 5 zeigt einen schematischen Querschnitt durch ein erfindungsgemäßes textiles Erzeugnis 1 zur Herstellung von Bekleidung 2 in Bezug auf einen Träger T der Bekleidung 2, wobei im Gegensatz zur Skizze gemäß Fig. 1 eine zusätzliche Lage aus einem dritten Garn 6 vorgesehen ist.

Versuche mit einer Sportbekleidung aus einem textilen Erzeugnis 1 aus Hanf und Holzzellstofffasern oder dgl. haben gezeigt, dass gegenüber herkömmlicher Funktionswäsche mit Kunstfasern die Körpertemperatur des Trägers nicht so hoch ansteigt und darüber hinaus eine geringere Schweißabsonderung resultiert. Im Detail haben die Versuche folgendes Ergebnis gezeigt:
Die abgesonderte Schweißmenge nach 60 Minuten Belastung betrug bei der Verwendung eines synthetischen Bekleidungsstückes 339 g, während die Menge an Schweiß bei Verwendung des erfindungsgemäßen textilen Erzeugnisses aus Hanf nur 246 g betrug. Diese Versuche, welche anhand größerer Probandenzahl verifiziert werden müssen, zeigen aber deutlich die positive Eigenschaft des verwendeten Materials, insbesondere im Leistungssport.

## Patentansprüche

1. Textiles Erzeugnis (1) zur Herstellung von Bekleidung (2), insbesondere Sportbekleidung, oder dgl., aus einem textilen Flächengebilde (3) aus zumindest einem ersten Garn (4) und zumindest einem zweiten Garn (5), welche Garne (4, 5) aus unterschiedlichen, ausschließlich natürlichen Materialien bestehen, wobei das textile Flächengebilde (3) an einer Seite (I), die vorgesehen ist, einem Träger (T) zugewandt zu werden, hauptsächlich aus dem ersten Garn (4) besteht und das textile Flächengebilde (3) an einer Seite (A), die vorgesehen ist, vom Träger (T) abgewandt zu werden, hauptsächlich aus dem zweiten Garn (5) besteht, **dadurch gekennzeichnet, dass** das erste Garn (4) aus einem Material mit geringer Wasseraufnahme von 5% bis 30% und das zweite Garn (5) aus einem Material mit hoher Wasseraufnahme von 50% bis 80% besteht.

2. Textiles Erzeugnis (1) nach Anspruch 1, **dadurch gekennzeichnet, dass** das erste Garn (4) aus Hanf besteht.

3. Textiles Erzeugnis (1) nach Anspruch 1 oder 2, **dadurch gekennzeichnet, dass** das zweite Garn (5) aus Zellstoff, insbesondere Holzzellstoff, besteht.

4. Textiles Erzeugnis (1) nach einem der Ansprüche 1 bis 3, **dadurch gekennzeichnet, dass** das textile Flächengebilde (3) aus 20 bis 60 Gew.-% des ersten Garns (4) und 30 bis 80 Gew.-% des zweiten Garns (5) besteht.

5. Textiles Erzeugnis (1) nach Anspruch 4, **dadurch gekennzeichnet, dass** das textile Flächengebilde (3) aus 35 Gew.-% des ersten Garns (4) und 65 Gew.-% des zweiten Garns (5) besteht.

6. Textiles Erzeugnis (1) nach einem der Ansprüche 1 bis 5, **dadurch gekennzeichnet, dass** das textile Flächengebilde (3) ein drittes Garn (6) aufweist.

7. Textiles Erzeugnis (1) nach Anspruch 6, **dadurch gekennzeichnet, dass** das dritte Garn (6) aus einer Kunstfaser wie Elastan (Lycra) oder vorzugsweise aus einem Biopolymer besteht.

8. Textiles Erzeugnis (1) nach Anspruch 6 oder 7, **dadurch gekennzeichnet, dass** das textile Flächengebilde (3) 10 bis 25 Gew.-% des dritten Garns (6) aus Kunststoff aufweist.

9. Textiles Erzeugnis (1) nach einem der Ansprüche 1 bis 8, **dadurch gekennzeichnet, dass** das erste Garn (4) eine Feinheit von mindestens 10 Nm, vorzugsweise mindestens 50 Nm, aufweist.

10. Textiles Erzeugnis (1) nach einem der Ansprüche 1 bis 9, **dadurch gekennzeichnet, dass** das zweite Garn (5) eine Feinheit von mindestens 20 Nm, vorzugsweise mindestens 40 Nm, aufweist.

11. Textiles Erzeugnis (1) nach einem der Ansprüche 1 bis 10, **dadurch gekennzeichnet, dass** das dritte Garn (6) eine Feinheit von mindestens 20 Nm, vorzugsweise mindestens 40 Nm, aufweist.

12. Textiles Erzeugnis (1) nach einem der Ansprüche 1 bis 11, **dadurch gekennzeichnet, dass** die Garne (4, 5, 6) eingefärbt sind.

13. Textiles Erzeugnis (1) nach einem der Ansprüche 1 bis 12, **dadurch gekennzeichnet, dass** das textile Flächengebilde (3) ein Gestrick (7) ist, welches durch Stricken der Garne (4, 5, 6) vorzugsweise mit Plattiertechnik hergestellt ist.

14. Textiles Erzeugnis (1) nach einem der Ansprüche 1 bis 12, **dadurch gekennzeichnet, dass** das textile Flächengebilde (3) ein Gewebe (8) ist, welches durch Weben der Garne (4, 5, 6) hergestellt ist.

15. Bekleidung, insbesondere Sportbekleidung, aus einem textilen Erzeugnis (1) nach einem der Ansprüche 1 bis 14.

## Claims

1. Textile product (1) for producing clothing (2), in particular sportswear or the like, from a textile fabric (3) consisting of at least one first yarn (4) and at least one second yarn (5), which yarns (4, 5) consist of different, exclusively natural materials, the textile fabric (3) consisting mainly of the first yarn (4) on a side (I) intended to face a wearer (T) and the textile fabric (3) consisting mainly of the second yarn (5) on a side (A) intended to face away from the wearer (T), **characterised in that** the first yarn (4) consists of a material with a low water absorption of from 5% to 30% and the second yarn (5) consists of a material with high water absorption of from 50% to 80%.

2. Textile product (1) according to claim 1, **characterised in that** the first yarn (4) consists of hemp.

3. Textile product (1) according to either claim 1 or claim 2, **characterised in that** the second yarn (5) consists of cellulose, in particular wood cellulose.

4. Textile product (1) according to any of claims 1 to 3, **characterised in that** the textile fabric (3) consists of 20 to 60 wt.% of the first yarn (4) and 30 to 80 wt.% of the second yarn (5).

5. Textile product (1) according to claim 4, **characterised in that** the textile fabric (3) consists of 35 wt.% of the first yarn (4) and 65 wt.% of the second yarn (5).

6. Textile product (1) according to any of claims 1 to 5, **characterised in that** the textile fabric (3) has a third yarn (6).

7. Textile product (1) according to claim 6, **characterised in that** the third yarn (6) consists of a synthetic fibre such as elastane (Lycra) or preferably of a biopolymer.

8. Textile product (1) according to either claim 6 or claim 7, **characterised in that** the textile fabric (3) comprises 10 to 25 wt.% of the third yarn (6) consisting of plastics material.

9. Textile product (1) according to any of claims 1 to 8, **characterised in that** the first yarn (4) has a fineness of at least 10 Nm, preferably at least 50 Nm.

10. Textile product (1) according to any of claims 1 to 9, **characterised in that** the second yarn (5) has a fineness of at least 20 Nm, preferably at least 40 Nm.

11. Textile product (1) according to any of claims 1 to 10, **characterised in that** the third yarn (6) has a fineness of at least 20 Nm, preferably at least 40 Nm.

12. Textile product (1) according to any of claims 1 to 11, **characterised in that** the yarns (4, 5, 6) are coloured.

13. Textile product (1) according to any of claims 1 to 12, **characterised in that** the textile fabric (3) is a knitted fabric (7) which is produced by knitting the yarns (4, 5, 6), preferably using the plating technique.

14. Textile product (1) according to any of claims 1 to 12, **characterised in that** the textile fabric (3) is a woven fabric (8) which is produced by weaving the yarns (4, 5, 6).

15. Clothing, in particular sportswear, made from a textile product (1) according to any of claims 1 to 14.

## Revendications

1. Produit textile (1) pour la confection de vêtements (2), en particulier de vêtements de sport, ou similaires, constitués d'une étoffe textile (3) composée d'au moins un premier fil (4) et d'au moins un deuxième fil (5), les fils (4, 5) étant constitués de différents matériaux exclusivement naturels, l'étoffe textile (3) située sur un côté (I), qui est destinée à faire face à un support (T), se composant principalement du premier fil (4) et l'étoffe textile (3) située sur un côté (A), qui est destinée à être opposée au support (T), se composant principalement du deuxième fil (5), **caractérisé en ce que** le premier fil (4) est constitué d'un matériau affichant une faible absorption d'eau comprise entre 5 % et 30 % et que le deuxième fil (5) est constitué d'un matériau affichant une forte absorption d'eau comprise entre 50 % et 80 %.

2. Produit textile (1) selon la revendication 1, **caractérisé en ce que** le premier fil (4) est constitué de chanvre.

3. Produit textile (1) selon la revendication 1 ou 2, **caractérisé en ce que** le deuxième fil (5) est constitué de pâte chimique, en particulier de pâte de bois.

4. Produit textile (1) selon l'une quelconque des revendications 1 à 3, **caractérisé en ce que** l'étoffe textile (3) est constituée de 20 à 60 % en poids du premier fil (4) et de 30 à 80 % en poids du deuxième fil (5).

5. Produit textile (1) selon la revendication 4, **caractérisé en ce que** l'étoffe textile (3) est constituée de 35 % en poids du premier fil (4) et de 65 % en poids du deuxième fil (5).

6. Produit textile (1) selon l'une quelconque des revendications 1 à 5, **caractérisé en ce que** l'étoffe textile (3) présente un troisième fil (6).

7. Produit textile (1) selon la revendication 6, **caractérisé en ce que** le troisième fil (6) est constitué d'une fibre synthétique telle que de l'élasthanne (lycra) ou de préférence d'un biopolymère.

8. Produit textile (1) selon la revendication 6 ou 7, **caractérisé en ce que** l'étoffe textile (3) présente entre 10 à 25 % en poids du troisième fil (6) en plastique.

9. Produit textile (1) selon l'une quelconque des revendications 1 à 8, **caractérisé en ce que** le premier fil (4) présente une finesse d'au moins 10 Nm, de préférence d'au moins 50 Nm.

10. Produit textile (1) selon l'une quelconque des revendications 1 à 9, **caractérisé en ce que** le deuxième fil (5) présente une finesse d'au moins 20 Nm, de préférence d'au moins 40 Nm.

11. Produit textile (1) selon l'une quelconque des revendications 1 à 10, **caractérisé en ce que** le troisième fil (6) présente une finesse d'au moins 20 Nm, de préférence d'au moins 40 Nm.

12. Produit textile (1) selon l'une quelconque des revendications 1 à 11, **caractérisé en ce que** les fils (4, 5, 6) sont de couleur.

13. Produit textile (1) selon l'une quelconque des revendications 1 à 12, **caractérisé en ce que** l'étoffe textile (3) est un tricot (7) qui est réalisé par tricotage des fils (4, 5, 6), de préférence en utilisant la technique du vanisage.

14. Produit textile (1) selon l'une quelconque des revendications 1 à 12, **caractérisé en ce que** l'étoffe textile (3) est un tissu (8) qui est réalisé par tissage des fils (4, 5, 6).

15. Vêtements, en particulier vêtements de sport, fabriqués à partir d'un produit textile (1) selon l'une quelconque des revendications 1 à 14.
